# EUROPEAN PATENT APPLICATION

(11) **EP 1 198 092 A2**
(43) Date of publication of application: **17.04.2002**
(21) Application number: 01123350.9
(22) Date of filing: 09.10.2001
(51) Int. Cl.: H04L 12/28, G06F 17/60, H04L 29/06, H04Q 7/32

(54) **System and method for a customer to watch or listen to visual/aural data**

(30) Priority: 10.10.2000 JP 2000309384
(71) Applicant: NEC CORPORATION, Tokyo (JP)
(72) Inventor: Homma, Hiroki, Minato-ku, Tokyo (JP)
(74) Representative: VOSSIUS & PARTNER

(57) **Abstract**

A service system allows a customer to watch or listen to image or sound recorded in a recording medium as visual or aural data, in a shop selling the recording medium, before the customer makes decision as to whether he/she purchases the recording medium. The customer has a terminal (3-1-1) which is movable in the shop and to which the visual or aural data is transmitted for allowing the customer to watch or listen to the visual or aural data.

## Description

The invention relates to a service system for allowing a customer to watch or listen to image or sound recorded in a recording medium as visual or aural data, in a shop selling the recording medium, before the customer makes decision as to whether he/she purchases the recording medium. Herein, the term "sound" includes voices, music, conversation, speech and any other analogous data.

A conventional service system for allowing a customer to watch or listen to image or sound recorded in a recording medium as visual or aural data, in a shop selling the recording medium, before the customer makes decision as to whether he/she purchases the recording medium, is accompanied with a problem that if a second customer watches or listens to image or sound recorded in a target recording medium as visual or aural data, a first customer has to wait until the second customer finishes occupying the target recording medium, or give up watching or listening to image or sound recorded in the target recording medium. This may result in that the first customer does not purchase the recording medium, even if he/she was interested in the recording medium. This means that a shop selling the recording medium loses an opportunity of sales of the recording medium.

In view of the above-mentioned problem in the conventional system, it is an object of the present invention to provide a service system which allows a customer to watch or listen to his/her desired image or sound recorded in a target recording medium as visual or aural data, anywhere in a shop selling recording mediums, before the customer makes decision as to whether he/she purchases the target recording medium, without being interrupted by others who already occupy the target recording medium.

In one aspect of the present invention, there is provided s service system for allowing a person to watch or listen to image or sound recorded in a recording medium as visual or aural data, including (a) a first terminal, (b) at least one second terminal which is capable of making communication with the first terminal through a network, the second terminal being fixed in a predetermined closed area, and (c) a plurality of third terminals each making communication with the second terminal through radio signals, each of the third terminals being held by the person and being movable within the predetermined closed area, the first terminal including a database storing visual and aural data therein and distributing the visual and aural data to the second terminal, the second terminal storing therein the visual and aural data distributed from the first terminal, and distributing the visual and aural data to each of the third terminals in response to an access made by each of the third terminals to the second terminal, each of the third terminals making access to the second terminal by transmitting a signal indicative of visual and/or aural data selected by a user, receiving visual and/or aural data indicated by the signal, and reproducing the thus received visual and/or aural data.

For instance, the service system may be constituted as a service system which allows a customer to watch or listen to image or sound recorded in a recording medium as visual or aural data, in a shop selling the recording medium, before the customer makes decision as to whether he/she purchases the recording medium, wherein the first terminal is located outside the shop, the second terminal is fixed in the shop, and each of the third terminals is held by the customer in the shop, and accordingly is movable within the shop.

In another aspect of the present invention, there is provided a method of allowing a person to watch or listen to image or sound recorded in a recording medium as visual or aural data, in a system including a first terminal, at least one second terminal which is capable of making communication with the first terminal through a network, the second terminal being fixed in a predetermined closed area, a plurality of third terminals each making communication with the second terminal through radio signals, each of the third terminals being held by the person and being movable within the predetermined closed area, the method comprising the steps of (a) the person transmitting a request of watching or listening to his/her desired visual or aural data, to the second terminal through each of the third terminals, (b) the second terminal transmitting the request to the first terminal, (c) the first terminal transmitting visual and/or aural data identified by the request, to the second terminal, (d) the second terminal transmitting the received visual and/or aural data to each of the third terminals, and (e) the third terminal reproducing the visual and/or aural data having been received from the second terminal.

For instance, the method may be constituted as a method which allows a customer to watch or listen to image or sound recorded in a recording medium as visual or aural data, in a shop selling the recording medium, before the customer makes decision as to whether he/she purchases the recording medium, wherein the first terminal is located outside the shop, the second terminal is fixed in the shop, and each of the third terminals is held by the customer in the shop, and accordingly, is movable within the shop.

The advantages obtained by the aforementioned present invention will be described hereinbelow.

In accordance with the above-mentioned service system, a customer can watch or listen to his/her desired image or sound recorded in a target recording medium as visual or aural data, before he/she makes decision as to whether he/she purchases the target recording medium, without being interrupted by others who also watches or listens to image or sound recorded in the same target recording medium.

In addition, since the third terminal held by the customer and the second terminal fixed anywhere in the shop make radio-signal communication with each other in the shop, the customer can watch or listen to his/her desired image or sound anywhere in the shop.

Furthermore, the shop could have an opportunity of selling recording mediums more, if a customer makes decision of purchasing a recording medium which he/she watched or listened to before making such decision.

Furthermore, it is no longer necessary to prepare a space in a shop for customers to watch or listen to image or sound recorded in recording mediums as visual or aural data. As a result, the shop can utilize such a space for another purpose.

FIG. 1 is a block diagram of the service system in accordance with the first embodiment of the present invention.

FIG. 2 is a block diagram of the third terminal used in the service system in accordance with the first embodiment.

FIG. 3 is a sequence chart showing steps to be carried out by the first to third terminals in the first embodiment.

FIG. 4 is a block diagram of the third terminal used in the service system in accordance with the second embodiment.

FIG. 5 is a sequence chart showing steps to be carried out by the first to third terminals in the fourth embodiment.

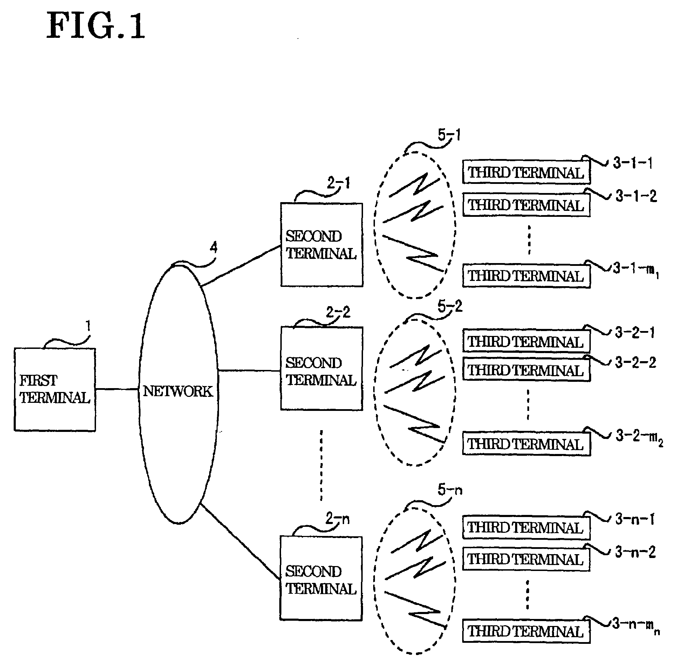

FIG. 1 is a block diagram of the service system in accordance with the first embodiment of the present invention which service system allows a customer to watch or listen to image or sound recorded in a target recording medium as visual or aural data, in a shop selling recording mediums, before the customer makes decision as to whether he/she purchases the target recording medium.

The service system is comprised of a first terminal 1 located outside a shop, a plurality of second terminals 2-1 to 2-n each of which is capable of making communication with the first terminal 1 through a network 4, and a plurality of third terminals 3-1-1 to 3-n-mₙ each of which makes communication with an associated second terminal 2-1 to 2-n through radio-signal links 5-1 to 5-n, namely, each of which makes radio-signal communication with an associated second terminal 2-1 to 2-n, wherein n is an integer equal to or greater than 1.

As illustrated in FIG. 1, a first group of the third terminals 3-1-1 to 3-1-m₁ makes radio-signal communication with the second terminal 2-1 through the radio-signal link 5-1, and similarly, a M-th group of the third terminals 3-M-1 to 3-M-m_{M} makes radio-signal communication with the second terminal 2-M through the radio-signal link 5-M, wherein M is an integer equal to or greater than 1, but equal to or smaller than n (1≦M≦n).

The first terminal 1 acts as a database storing visual and aural data. The first terminal 1 distributes the visual and aural data stored therein, to each of the second terminals 2-1 to 2-n through the network 4.

The second terminals 2-1 to 2-n are fixed at predetermined locations in a shop selling recording mediums such as a floppy disc, a magnetic tape, a record, DVD, and so on. Each of the second terminals 2-1 to 2-n distributes the visual and aural data received from the first terminal 1, to each of the third terminals 3-1-1 to 3-1-m₁. Each of the second terminals 2-1 to 2-n includes a memory (not illustrated) to store therein the visual and aural data having been received from the first terminal 1.

Each of the third terminals 3-p-q (p = 1, 2, ---, n, and q = 1, 2, ---, mₚ) is held by a customer walking and/or looking for his/her desired recording medium in the shop. That is, each of the third terminals 3-1-1 to 3-1-m₁ always moves together with a customer.

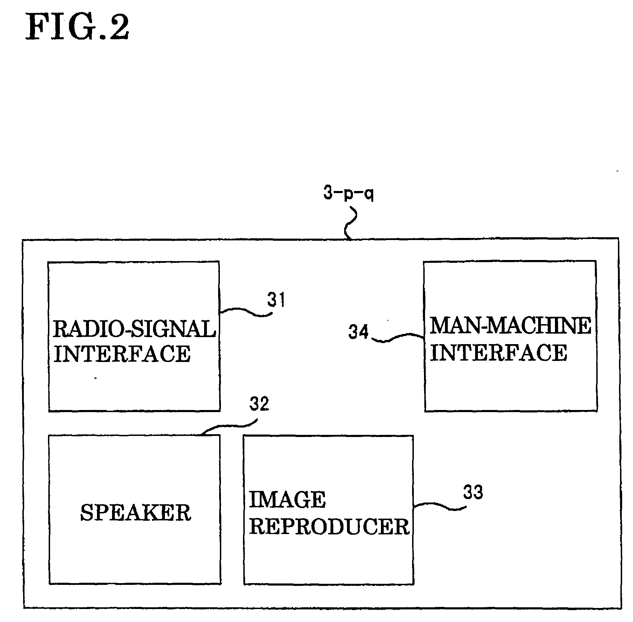

FIG. 2 is a block diagram of each of the third terminals 3-p-q.

As illustrated in FIG. 2, each of the third terminals 3-p-q is comprised of a radio-signal interface 31, a speaker 32 as an aural data reproduce, an image reproducer 33 as an visual data reproducer, and a man-machine interface 34.

Each of the third terminals 3-p-q makes connection with the radio-signal line 5-p through the radio-signal interface 31, and makes access to the visual and aural data stored in the second terminal 2-p.

Each of the third terminals 3-p-q reproduces the visual and aural data received from the second terminal 2-p, by means of the speaker 32 and/or the image reproducer 33.

A user inputs data to each of the third terminals 3-p-q through the man-machine interface 34 to thereby select his/her desired visual and/or aural data.

The network 4 is comprised of Internet or a communication line owned by the shop, for instance.

In the specification, the recording medium may include music, images, games, programs, and other digital contents.

Each of the third terminals 3-p-q may be comprised of a personal computer, a cellular phone, an audio headphone type terminal, or any other analogous devices. Each of the third terminals 3-p-q may be owned by the shop or a user.

The radio-signal links 5-1 to 5-n may be comprised of radio-signal LAN (local area network), bluetooth, or any other analogous systems. Each of the third terminals 3-p-q may be connected to the associated radio-signal link 5-1 to 5-n through IP (Internet protocol), PPP (point-to-point protocol) or any other analogous protocols.

It is not always necessary for each of the third terminals 3-p-q to include both the speaker 32 and the image reproducer 33. Each of the third terminals 3-p-q may have only one of them, if only one of visual and aural data is necessary to be reproduced.

Hereinbelow is explained an operation of the service system in accordance with the first embodiment.

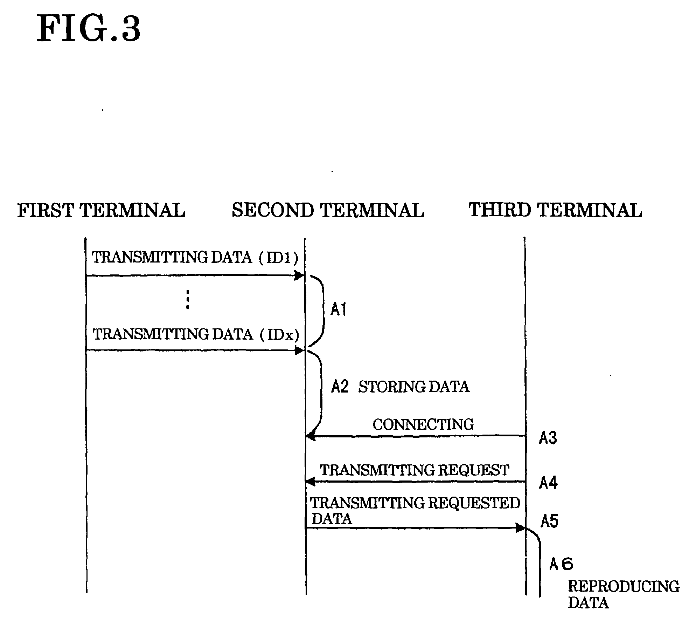

FIG. 3 is a sequence chart showing steps to be carried out by the first terminal 1, the second terminals 2-1 to 2-n, and the third terminals 3-1-1 to 3-n-mₙ.

The second terminals 2-1 to 2-n are connected to the first terminal 1 through the network 4. The third terminals 3-p-q (p = 1, 2, --, n, and q = 1, 2, ---, mₚ) can be connected to the associated second terminal 2-p through the radio-signal link 5-p (p = 1, 2, ---, n).

In operation, the first terminal 1 transmits data ID1 to IDx to the second terminals 2-1 to 2-n, in step A1. Those data ID1 to IDx are used for identifying any one data among visual or aural data. The second terminals 2-1 to 2-n stores the received data ID1 to IDx therein, in step A2.

Then, a customer makes communication with the associated second terminal 2-p through the associated radio-signal link 5-p by means of the third terminal 3-p-q held by himself/herself, in step A3.

Then, the customer selects an ID number indicative of his/her desired image or sound, inputs the selected ID number into the third terminal 3-p-q through the man-machine interface 34, and transmits a request of transmitting visual or aural data constituting his/her desired image or sound, to the associated second terminal 2-p, in step A4. Thus, the customer makes access to visual or aural data identified with the ID number, among visual or aural data stored in the second terminal 2-p.

In response to the access made by the customer, the second terminal 2-p transmits the requested visual or aural data to the third terminal 3-p-q in the form of data-stream, in step A5.

Then, the customer reproduces the received visual or aural data by means of the speaker 32 or the image reproducer 33, and resultingly, the customer can watch or listen to his/her desired image or sound, in step A6, before he/she makes decision as to whether he/she purchases a recording medium in which his/her desired image or sound is stored.

Hereinbelow is explained the service system in accordance with the second embodiment.

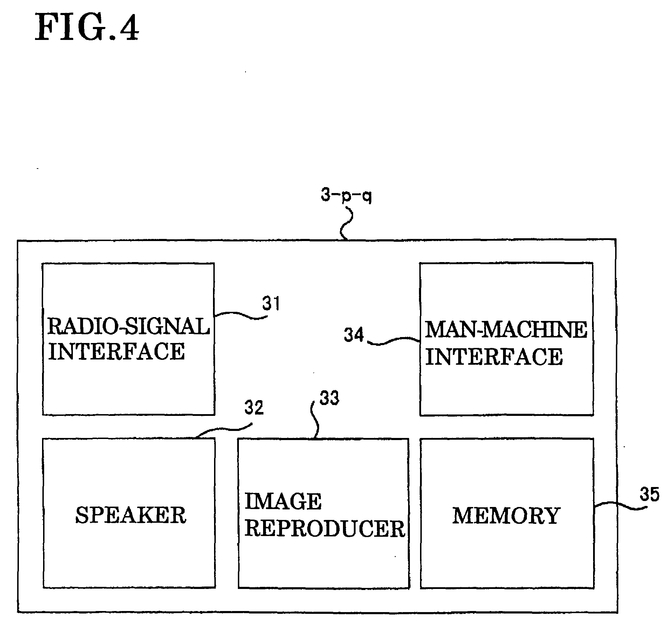

FIG. 4 is a block diagram of a third terminal used in the second embodiment.

As illustrated in FIG. 4, each of the third terminals 3-1-1 to 3-n-mₙ is designed to include a memory 35 in the second embodiment. Accordingly, a customer can store the visual or aural data received from the associated second terminal 2-p, in the memory 35, and hence, can repeat watching or listening to his/her desired image or sound.

Hereinbelow is explained the service system in accordance with the third embodiment.

In the third embodiment, when a customer makes communication with the associated second terminal 2-p through the associated radio-signal line 5-p by means of the third terminal 3-p-q, in step A3, the second terminal 2-p transmits a list showing all visual and aural data which the customer can watch or listen to, to the third terminal 3-p-q. Hence, the customer can select any one or more visual or aural data which he/she would like to watch or listen to, in the step A4.

For instance, each of the third terminals 3-1-1 to 3-n-mₙ may be designed to have a Web browser for showing a customer a list of all visual and aural data which can be presented to the customer. An ID number is assigned to each of visual and aural data displayed by the Web browser. Hence, if only the customer selects any one of the ID numbers, the third terminal 3-p-q can receive visual or aural data identified with the ID number selected by the customer.

Hereinbelow is explained the service system in accordance with the fourth embodiment.

In the fourth embodiment, each of the second terminals 2-1 to 2-n acts as a router. This allows a customer to directly watch or listen to image or sound transmitted from the first terminal 1 in the form of visual or aural data, before he/she makes decision as to whether he/she purchases a recording medium storing the image or sound.

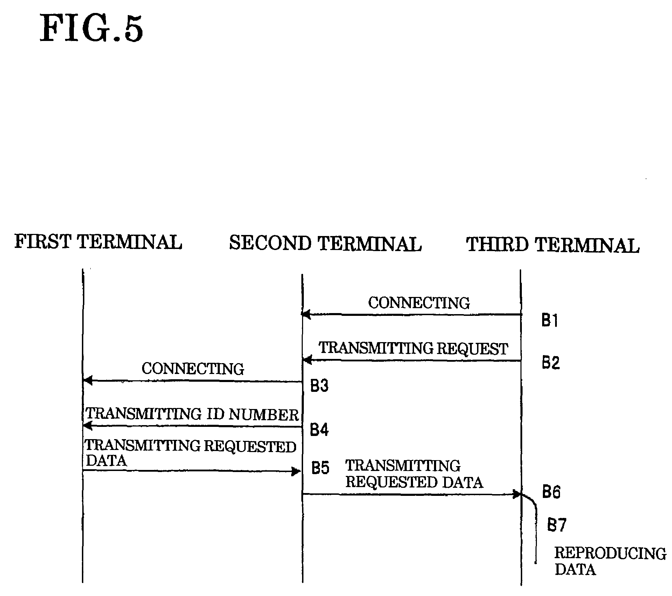

FIG. 5 is a sequence chart showing steps to be carried out by the first terminal 1, the second terminals 2-1 to 2-n, and the third terminals 3-1-1 to 3-n-mₙ.

With reference to FIG. 5, first, a customer makes communication with the associated second terminal 2-p through the associated radio-signal link 5-p by means of the third terminal 3-p-q held by himself/herself, in step B1.

Then, the customer selects an ID number indicative of his/her desired image or sound, inputs the selected ID number into the third terminal 3-p-q through the man-machine interface 34, and transmits a request of transmission of visual or aural data constituting his/her desired image or sound, to the associated second terminal 2-p, in step B2.

Then, the second terminal 2-p makes communication with the first terminal 1 through the network 4, in step B3. Then, the second terminal 2-p transmits the ID number having been selected by the customer, to the first terminal, in step B4.

The first terminal 1 transmits visual or aural data identified with the ID number having been transmitted from the second terminal 2-p, to the second terminal 2-p, in step B5.

Then, the second terminal 2-p transmits the visual or aural data having been received from the first terminal 1, to the third terminal 3-p-q, in step B6. When the second terminal 2-p transmits the visual or aural data to the third terminal 3-p-q, the second terminal 2-p may store the visual or aural data apart from transmission of them to the third terminal 3-p-q, or may transmit the visual or aural data to the third terminal 3-p-q in the form of data-stream.

Then, the customer reproduces the visual or aural data having been received from the second terminal 2-p, through the image reproducer 33 or the speaker 23, in step B7.

In the fourth amendment, the second terminal 2-p receives the visual or aural data identified with the ID number having been selected by the customer, from the first terminal 1. Instead of receiving the visual or aural data from the first terminal 1, the second terminal 2-p may select a web site which stores the visual or aural data identified with the ID number having been selected by the customer, and download the data from the site.

Hereinbelow is explained the service system in accordance with the fifth embodiment.

In the fifth embodiment, it is assumed that a first customer selects certain image or sound, but a second customer has already watched or listened to the image or sound.

In the fifth embodiment, each of the radio-signals 5-1 to 5-n is designed to have a function of carrying out multi-destination delivery. Hence, even if the second customer has already watched or listened to the image or sound, the first customer can watch or listen to the image or sound concurrently with the second customer.

If a plurality of customers select the same image or sound, a customer who makes access to the image or sound later than other customers can share the image or sound which a customer who made first access to the image or sound is now watching or listening to. This makes it possible for a shop to effectively utilize frequencies assigned to the radio-signal links 5-1 to 5-n.

Hereinbelow is explained the service system in accordance with the sixth embodiment.

In accordance with the sixth embodiment, after a customer has watched or listened to his/her desired image or sound, he/she can purchase a recording medium storing therein visual or aural data of which the image or sound is composed.

In the sixth embodiment, the third terminal 3-p-q is designed to include a memory 35, as illustrated in FIG. 4, and the memory 35 is equipped with a driver for driving a removable recording medium.

First, a customer receives visual or aural data at his/her third terminal 3-p-q through the radio-signal link 5-p from the second terminal 2-p. The thus received visual or aural data is stored in a removable recording medium inserted into the memory 35.

Then, the customer reproduces the received visual or aural data. The customer can purchase the visual or aural data stored in the removable recording medium, without necessity of receiving the visual or aural data again.

In order to prevent a customer from illegally copying the visual or aural data having been received at his/her third terminal 3-p-q from the second terminal 2-p, the visual or aural data may be partially incomplete, may be partially scrambled, or may be designed not to be able to be reproduced any longer, if reproduced a predetermined number of times. In such a case, a customer will be compensated for incompleteness of the visual or aural data, receive a password for releasing the visual or aural data from being scrambled, or be released from the restriction in reproducing the visual or aural data.

When a customer purchases a recording medium storing his/her desired image or sound, a menu in the form of web may be transmitted to his/her third terminal 3-p-q, and displayed on the man-machine interface 34. A customer may make purchase in accordance with instructions displayed on the man-machine interface 34, or may bring his/her third terminal 3-p-q directly to an accountant of the shop.

In accordance with the sixth embodiment, a customer can soon purchase a recording medium storing his/her favorite image or sound.

When a customer purchases a recording medium in Internet shopping, the customer has to pay an Internet communication fee as well as a fee to the recording medium. In addition, when a person makes access to Internet, he/she cannot have a sufficient line speed.

However, in accordance with the sixth embodiment, a customer does not need to pay an Internet communication fee, since the customer receives visual or aural data through the radio-signal lines 5-1 to 5-n. In addition, a customer can receive data at a sufficiently high data-receipt speed.

## Claims

1. A service system for allowing a person to watch or listen to image or sound recorded in a recording medium as visual or aural data, comprising:
(a) a first terminal (1);
(b) at least one second terminal (2-1 to 2-n) which is capable of making communication with the first terminal (1) through a network (4), the second terminal (2-1 to 2-n) being fixed in a predetermined closed area; and
(c) a plurality of third terminals (3-1-1 to 3-n-mn) each making communication with the second terminal (2-1 to 2-n) through radio signals, each of the third terminals (3-1-1 to 3-n-mₙ) being held by the person and being movable within the predetermined closed area,
the first terminal (1) including a database storing visual and aural data therein and distributing the visual and aural data to the second terminal (2-1 to 2-n),
the second terminal (2-1 to 2-n) storing therein the visual and aural data distributed from the first terminal (1), and distributing the visual and aural data to each of the third terminals (3-1-1 to 3-n-mₙ) in response to an access made by each of the third terminals (3-1-1 to 3-n-mₙ) to the second terminal (2-1 to 2-n),
each of the third terminals (3-1-1 to 3-n-mₙ) making access to the second terminal (2-1 to 2-n) by transmitting a signal indicative of visual and/or aural data selected by a user, receiving visual and/or aural data indicated by the signal, and reproducing the thus received visual and/or aural data.

2. The service system as set forth in claim 1, wherein the service system allows a customer to watch or listen to image or sound recorded in a recording medium as visual or aural data, in a shop selling the recording medium, before the customer makes decision as to whether he/she purchases the recording medium, and wherein
the first terminal (1) is located outside the shop,
the second terminal (2-1 to 2-n) is fixed in the shop, and
each of the third terminals (3-1-1 to 3-n-mₙ) is held by the customer in the shop, and accordingly is movable within the shop.

3. The service system as set forth in claim 1 or 2, wherein each of the third terminals (3-1-1 to 3-n-mₙ) includes:
(b1) a radio-signal interface (31) transmitting radio signals to and receiving radio signals from the second terminal (2-1 to 2-n);
(b2) a reproducer (32, 33) which reproduces the visual and/or aural data; and
(b3) a man-machine interface (34) through which a user selects his/her desired visual and/or aural data.

4. The system as set forth in claim 1, 2 or 3, wherein each of the third terminals (3-1-1 to 3-n-mₙ) further includes a memory (35) in which visual and/or aural data having been reproduced by the reproducer is stored.

5. The system as set forth in claim 1, 2, 3 or 4, wherein each of the third terminals (3-1-1 to 3-n-mₙ) further includes a memory having a driver for driving a removable recording medium.

6. The system as set forth in any one of claims 1 to 5, wherein the second terminal (2-1 to 2-n) has a function of carrying out multi-destination delivery.

7. The system as set forth in any one of claims 1 to 6, wherein each of the third terminals (3-1-1 to 3-n-mₙ) is comprised of a cellular phone.

8. The system as set forth in any one of claims 1 to 7, wherein the second terminal (2-1 to 2-n) and each of the third terminals (3-1-1 to 3-n-mₙ) make communication with each other through bluetooth signals.

9. The system as set forth in any one of claims 1 to 8, wherein the second terminal (2-1 to 2-n) transmits a list showing all visual and aural data which the customer can watch or listen to, to each of the third terminals (3-1-1 to 3-n-mₙ).

10. A method of allowing a person to watch or listen to image or sound recorded in a recording medium as visual or aural data, in a system including:
a first terminal (1);
at least one second terminal (2-1 to 2-n) which is capable of making communication with the first terminal (1) through a network (4), the second terminal (2-1 to 2-n) being fixed in a predetermined closed area;
a plurality of third terminals (3-1-1 to 3-n-mₙ) each making communication with the second terminal (2-1 to 2-n) through radio signals, each of the third terminals (3-1-1 to 3-n-mn) being held by the person and being movable within the predetermined closed area,
the method comprising the steps of:
(a) the person transmitting a request of watching or listening to his/her desired visual or aural data, to the second terminal (2-1 to 2-n) through each of the third terminals (3-1-1 to 3-n-mₙ);
(b) the second terminal (2-1 to 2-n) transmitting the request to the first terminal (1);
(c) the first terminal (1) transmitting visual and/or aural data identified by the request, to the second terminal (2-1 to 2-n);
(d) the second terminal (2-1 to 2-n) transmitting the received visual and/or aural data to each of the third terminals (3-1-1 to 3-n-mₙ); and
(e) the third terminal reproducing the visual and/or aural data having been received from the second terminal (2-1 to 2-n).

11. The method as set forth in claim 10, wherein the method allows a customer to watch or listen to image or sound recorded in a recording medium as visual or aural data, in a shop selling the recording medium, before the customer makes decision as to whether he/she purchases the recording medium,
the first terminal (1) is located outside the shop,
the second terminal (2-1 to 2-n) is fixed in the shop, and
each of the third terminals (3-1-1 to 3-n-mₙ) is held by the customer in the shop, and accordingly, is movable within the shop.

12. The method as set forth in claim 10 or 11, further comprising the step of (f) the second terminal (2-1 to 2-n) storing therein the visual and/or aural data having been received from the first terminal (1).

13. The method as set forth in claim 10, 11 or 12, comprising the step of (g) each of the third terminals (3-1-1 to 3-n-mₙ) storing the visual and/or aural data having been received from the second terminal (2-1 to 2-n), in a memory which is removable from each of the third terminals (3-1-1 to 3-n-mₙ).

14. The method as set forth in claim 11, 12 or 13, comprising the step of (h) the second terminal (2-1 to 2-n) transmitting a list showing all visual and aural data which the customer can watch or listen to, to each of the third terminals (3-1-1 to 3-n-mₙ).
